Europäisches Patentamt

European Patent Office

Office européen des brevets

(19)

(11) Veröffentlichungsnummer: **0 302 083**

**B1**

(12) **EUROPÄISCHE PATENTSCHRIFT**

(45) Veröffentlichungstag der Patentschrift: **29.08.90**

(51) Int. Cl.⁵: **F 24 D 3/10**

(21) Anmeldenummer: **87906159.6**

(22) Anmeldetag: **25.09.87**

(86) Internationale Anmeldenummer:
**PCT/DE87/00439**

(87) Internationale Veröffentlichungsnummer:
**WO 88/02463 07.04.88 Gazette 88/08**

(54) **MISCHERVENTIL FÜR HEIZUNGSANLAGEN.**

(30) Priorität: **25.09.86 DE 8625641 u**
**01.12.86 DE 3641005**

(43) Veröffentlichungstag der Anmeldung:
**08.02.89 Patentblatt 89/06**

(45) Bekanntmachung des Hinweises auf die
Patenterteilung:
**29.08.90 Patentblatt 90/35**

(84) Benannte Vertragsstaaten:
**AT BE CH DE FR GB IT LI LU NL SE**

(56) Entgegenhaltungen:
**DE-C-1 958 277**
**DE-U-7 716 337**
**FR-A-2 385 020**
**US-A-3 664 373**

(73) Patentinhaber: **SCHICHL, Karl**
**Am Rehwinkel 2**
**D-8151 Warngau (DE)**

(72) Erfinder: **SCHICHL, Karl**
**Am Rehwinkel 2**
**D-8151 Warngau (DE)**

(74) Vertreter: **Seibert, Rudolf, Dipl.-Ing. et al**
**Tattenbachstrasse 9**
**D-8000 München 22 (DE)**

Courier Press, Leamington Spa, England.

EP 0 302 083 B1

**Beschreibung**

Die Erfindung bezieht sich auf ein Mischerventil für Heizungs- und Warmwasseranlagen, das im Gehäuse einer Umwälzpumpe derart integriert ist, daß das mit Schaufeln versehene radförmige Mischerstellglied und das Laufrad der Umwälzpumpe achsfluchtend angeordnet sind, so daß das Mischerstellglied von dem Antrieb für das Laufrad der Umwälzpumpe über eine steuerbare Kopplung oder eine ein- und ausrückbare Kupplung verstellt werden kann.

Ein derartiger Aufbau eines Mischerventils in Verbindung mit einer Umwälzpumpe ist beispielsweise durch die US—A—3,664,373 bekannt geworden. Ein solcher Aufbau ist nicht nur besonders platzsparend realisierbar, da eine kompakte Bauweise mit einer unmittelbaren Führung des umzuwälzenden Warmwassers und Kaltwassers möglich ist, sondern ein gemeinsamer Antrieb für das Stellglied des Mischerventils und die Umwälzpumpe erleichtert auch die Steuerungsvorgänge, was bei möglichem Stromausfall usw. zur richtigen Führung des Heizwasservorlaufes und -rücklaufes führt, da ja beide Geräte eine Einheit bilden.

Es ist bekannt, daß es für Heizungsanlagen äußerst schädlich ist, wenn das Wasser im Kesselrücklauf eine vorgegebene Mindesttemperatur, vorzugsweise im Bereich von 40-45°C unterschreitet. Bei zu niedrigen Temperaturen treten in einer in Betrieb befindlichen Heizungsanlage Spannungen auf, die neben Temperaturspannungen auch zu Korrosionen wegen der hohen Temperaturdifferenz führen. Zur Vermeidung dieses Nachteils ist es unter anderem durch die FR—A—2,385,020 bekannt geworden, dem aus dem Heizungsrücklauf kommenden und über den Kesselrücklauf dem Kessel zuzuführenden abgekühlten Heizungswasser heißes Wasser aus dem Kesselvorlauf beim Austritt aus dem Mischerventil beizumischen. Dabei ist der Grad der Vermischung von Rücklaufwasser und Vorlaufwasser von der Stellung des Stellgliedes und dem Druck des Rücklaufwassers abhängig und es bedarf besonderer Maßnahmen, um ein und dasselbe Mischerventil für Links- und Rechtseinbau geeignet zu machen. Es bedarf hierzu besonderer Bypassleitungen, die den Aufbau des Ventils wesentlich vergrößern und komplizierter machen, weil je nach Einbau einer der Bypässe abgedichtet werden muß.

Aufgabe der Erfindung ist es ein Mischerventil anzugeben, das in Verbindung mit einer Umwälzpumpe so gebaut ist, daß in jeder Stellung des Stellgliedes unabhängig von äußeren Einflüssen und insbesondere auch bei Stromausfall ein Unterschreiten der vorgegebenen Mindesttemperatur im Wasserrücklauf sicher verhindert wird, und zwar unabhängig vom Betriebszustand, also ob beispielsweise plötzlich in einem Heizungskreislauf mehrere ausgekühlte Heizkörper zugeschaltet werden, die Heizung angefahren wird, oder ob sie sich bereits längere Zeit in Betrieb befindet. Dabei soll eine Unterschreitung der Mindesttemperatur mit einfachen Mitteln, also ohne zusätzliche Regeleinrichtungen oder platzaufwendige Wasserführungsmaßnahmen verhindert werden.

Diese Aufgabe wird mit einem Mischerventil mit den Merkmalen des Patentanspruches 1 gelöst.

Bei dem Mischerventil nach der Erfindung ist das Stellglied des Ventils durch die reduzierte Breite der Schaufeln des Stellgliedes so ausgelegt, daß auch in der gesperrten Richtung, und zwar unabhängig von der Lage des Stellgliedes bzw. dessen Schaufeln ein im Vergleich des gesamten Durchflusses stark verminderter Wasseraustausch in der Größenordnung von 10 % des Wasserdurchsatzes im Mischerventil stattfindet, so daß das aus dem Heizkreis zum Ventil rücklaufende Wasser mit vom Heizkessel kommenden Wasser vermischt und damit vor Rücklauf in den Kessel auf eine erhöhte Rücklauftemperatur gebracht wird.

Dabei baut sich Mischerventil, Verteiler und Pumpe besonders kompakt, so daß die Einheit selbst in niedrigen Kellern wie ein herkömmliches Mischerventil einbaubar ist.

Wenn dann gemäß einer vorteilhaften Weiterbildung der Zuführkanal in die Mischerkammer in einem Winkel von 45° geführt ist, wird aufgrund hydraulisch mechanischer Wasserabdichtung ein druckabhängiger Wasseraustausch erreicht, derart, daß bei Ausfall der Pumpe eine größere Heißwassermenge zurückgeführt wird, weil ja dann auch das Rücklaufwasser wegen der geringen Umlaufgeschwindigkeit stärker abgekühlt ist. Bei hoher Umlaufgeschwindigkeit, d.h. hohem Druck ist der Austausch entsprechend größer.

Dabei wird gemäß einer Weiterbildung des Erfindungsgedankens dem Mischerventil vorzugsweise eine Ruhestellung zugeordnet, die jeweils den Heizkesselvorlauf mit dem Heizungsvorlauf einerseits und dem Heizungsrücklauf mit dem Heizkesselrücklauf andererseits umittelbar verbindet und die immer dann eingestellt wird, wenn die Umwälzpumpe — aus welchem Grund auch immer, also z.B. bei Stromausfall — nicht arbeitet. Es wird dann durch diese Anlage im Gegensatz zu allen anderen Anlagen, die mit Umwälzpumpe arbeiten, garantiert, daß der gesamte Heizungskreislauf nunmehr aufgrund der Schwerkraft des Wassers bzw. des Temperaturgefälles ständig mit Heißwasser versorgt wird, wobei der Vorteil des Mischvorganges zwischen Heißwasser und Rücklaufwasser unverändert erhalten bleibt.

Dabei soll die Ruhestellung, da sie ja auch bei Stromausfall einstellbar sein muß, von Hand einstellbar sein, wofür gemäß einer weiteren Weiterbildung eine besonders einfach über eine Betätigungswelle wirksame Kupplung zwischen Handantrieb und Antriebswelle des Mischerstellgliedes vorgesehen ist, die in einer in einem Kupplungsteil geführten von außen drehbaren Welle besteht, die im Kupplungsbereich als Halbwelle ausgebildet ist und durch Drehung in einer Ausnehmung der Stellgliedachse eine starre Verbindung zwischen beiden zu kuppelnden Teilen herstellt oder aber ein Lösen, in dem das gelöste Teil frei über die Abplattung der Halbwelle gleiten kann. Weitere Merkmale werden im folgenden in Verbindung mit der anliegenden Zeichnung erläutert.

In den Zeichnungen zeigen:
Fig. 1 schematisch einen Heizungskreislauf,
Fig. 2 eine geschnittene Draufsicht auf ein Stellglied eines Mischerventils nach der Erfindung und
Fig. 3 das Stellglied in einer Schnittdarstellung gemäß der Schnittlinie III—III in Fig. 2.

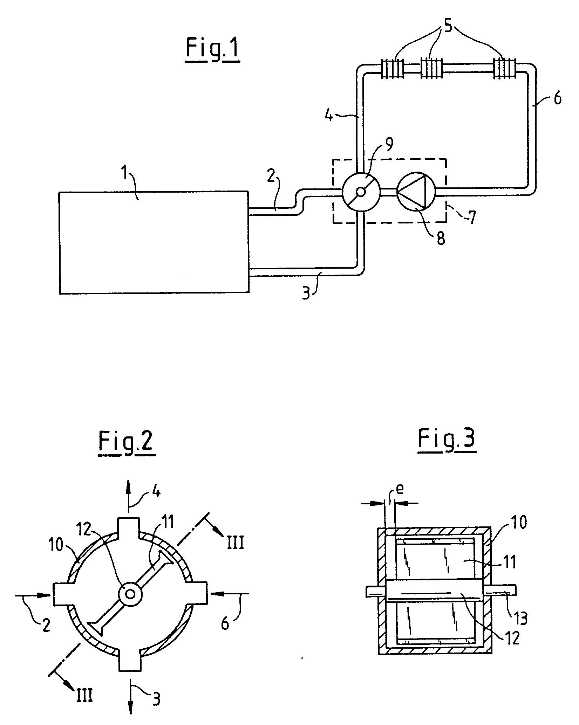

In Fig. 1 ist schematisch mit 1 ein Heizkessel bezeichnet, aus dem das aufgeheizte Wasser über die Leitung 2 zu einem Mischerventil 9 geführt ist und dem das Rücklaufwasser über eine Heizkesselrücklaufleitung 3 wieder zugeführt wird. Der Heizungsvorlauf erfolgt über eine Heizugsvorlaufleitug 4, über die dann die einzelnen Heizkörper 5 mit Heißwasser versorgt werden. Das Heißwasser wird über eine Heizungsrücklaufleitung 6 einer Einheit 7 aus Pumpe 8 und Mischerventil 9 zugefuhrt. Dabei ist, im Gegensatz zu herkömmlichen Anlagen, die Umälzpumpe 8 im Rücklauf angeordnet was, wie noch im einzelnen erläutert wird, bei Stromausfall von besonderer Bedeutung ist.

Umwalzpumpe 8 und Stellgliede des Mischerventils 9 sind konstruktiv so zusammengebaut, daß ihre Achsen fluchten, so daß der Antrieb der Umälzpumpe 8 unmittelbar zum Antrieb des Stellgliedes des Mischerventiles 9 verwendet werden kann, in dem die beiden Teile mechanisch, hydraulisch, magnetisch oder sonst wie miteinander steuerbar gekuppelt bzw. freigegeben werden.

Das Stellglied des Mischerventils 9 ist in der Fig. 1 in der Lage dargestellt, wie es bei einem normalen Heizungsbetrieb eingestellt ist, in dem eben das Heißwasser unmittelbar vom Heizkesselvorlauf 2 in den Heizkreisvorlauf 4 geführt und das rücklaufende Wasser aus dem Heizkreisrücklauf 6 in den Heizkesselrücklauf 3 fließt, und zwar mit einer Geschwndigkeit, die jeweils von dem Arbeiten der Pumpe 8 abhängt.

Diese Stellung des Stellgliedes ist in Fig. 2 in einer etwas gegenständlichen Darstellung und in etwas größerem Maßstab wiedergegeben. Dabei sind die vier Leitungsanschlüsse mit denselben Bezugzeichen wie in Fig. 1 gekennzeichnet. Das Stellglied selbst teilt den Innenraum des Ventils mit den Schaufeln 11 in zwei Hälften ab, wobei die Schaufeln über eine Antriebswelle 12 in an sich bekannter Weise zur Einstellung entsprechend verstellt werden können. Die Welle 12 wird abhängig vom Antrieb der Umwälzpumpe 8 in bekannter Weise über eine hydromechanische oder aber auch eine elektromagnetische oder mechanische Kupplung abhängig von Steuerwerten im Heizkreis bzw. aus den beheizten Räumen entsprechend verstellt, wobei dann Heizungsrücklauf mit Heizungsvorlauf unmittelbar verbunden werden usw.

Bei einer Stellung eines Stellgliedes nach Fig. 2 würde ohne Anwendung des Erfindungsgedankens das aus dem Heizungsrücklauf 6 kommende ggfs. stark abgekühlte Heizwasser unmittelbar in den Heizkesselrücklauf 3 geführt. Läuft der Heizkessel auf hohen Touren, beispielsweise 80°C oder mehr, dann entstehen in einem solchen Fall im Heizkessel selbst erhebliche Spannungen und zwar nicht nur unmittelbar im Einlaufbereich, sondern auch an den Wänden des Heizkessels bzw. der Heizungsrohre, an denen das stark abgekühlte Wasser zunächst geführt ist.

Erfindungsgemäß ist nun, wie aus Fig. 3 im Prinzip und nicht maßstabsgetreu gezeigt, eine Restverbindung zwischen dem das Heizungsvorlaufwasser führenden Raum mit dem das Rücklaufwasser führenden Raum vorgesehen, indem die Schaufeln 11 eine geringere Breite aufweisen, als der lichte Raum des Gehäuses 10 des Mischerventils. Dadurch entsteht ein Spalt e durch den Heißwasser aus dem Vorlaufkreis in den Rücklaufkreis eintreten kann, um dieses Rücklaufwasser entsprechend vorzuwärmen und auf eine Temperatur zu bringen, die in der Größenordnung von 40°C bis 45°C liegt.

Da die Einheit Mischerventil und Umwälzpumpe unmittelbar im Bereich des Heizkessels angeordnet sind, ergibt sich durch diesen Rücklauf praktisch kein Energieverlust. Umgekehrt wird die Lebensdauer von Anschlüssen und Heizkessel selbst wesentlich erhöht.

Die in den Fig. 1 und 2 gezeigte Stellung des Stellgliedes mit den Schaufeln 11 sollte die Ruhestellung sein, da in diesem Fall ein einwandfreier Umlauf des aufgeheizten Wassers durch den Heizkreis ermöglicht ist.

Wenn die Umwälzpumpe 8 ausfällt, in einem Zeitpumkt wo das Stellglied um 90° verdreht ist, weil beispielsweise von außen die Heizung gedrosselt werden sollte, so daß zunächst der Heizungskreislauf selbst und der Kreislauf vom Heizkessel 1 her in sich geschlossen ist, würde der Heizungskreis nicht mehr mit Heißwasser versorgt werden.

Um dies zu vermeiden, ist vorgesehen, eine vorzugsweise von Hand einstellbar Ruhestellung des Stellgliedes vorzusehen, die der eingezeichneten Stellung in Fig. 2 entspricht. In dieser Stellung wird auch ohne Pumpe aufgrund der Schwerkraft die Heizung voll in Funktion bleiben, wenn auch mit ggfs. geringerer Umlaufgeschwindigkeit des Heißwassers. Das vom Heizkessel 1 kommende Wasser steigt aufgrund der höheren Temperatur im Heizkreis nach oben fließt nach Abgabe der Wärme in den Heizkessel über die Leitung 6 und 3 zurück.

Um eine derartige Einstellung zu ermöglichen, ist dem Stellglied eine von Hand lösbare Kupplung zugeordnet, über die das Stellglied in seine Ruhelage von Hand geführt werden kann.

Eine derartige Kupplung kann an sich auf die verschiedenste Weise realisiert werden.

Am einfachsten kann dies dadurch geschehen, daß die Welle 12 aus dem Mischerventil einseitig etwas herausgeführt wird und dort mit einem von hand zugänglichen Kupplungteil versehen wird,

das über eine aus dem Gehäuse herausführende Stange oder einen Hebel entsprechend betätigbar ist und ein Verschwenken der Flügel erlaubt. Eine mögliche Ausführungsform besteht darin, die Welle 12 bis in den Bereich einer von außen verschwenkbaren Halbwelle zuführt, die eine halbwellenartige Ausnehmung hat, so daß durch Drehen der Welle entweder das freie Wellenende sich über der Abplattung der Halbwelle drehen oder aber das Halbwellenteil selbst in die Ausnehmung gedreht wird, wobei dann durch ein Verschwenken der Stange die Welle für die Schaufeln des Stellgliedes unmittelbar gedreht werden kann.

Diese kompakte Ausführungsform ist für einen breiten Leistungsbereich von z.B. 12 bis 110 KW ohne konstruktive Abwandlungen einsetzbar.

Wesentlich für dei Erfindung ist, daß in jeder Stellung des Stellgliedes des Mischerventils ein gewisser Rücklauf von Heißwasser in den Rücklaufkreis garantiert ist, um einen Schutz gegen ein Unterschreiten der Mindesttemperatur des Rücklaufwassers zu garantieren. Die hierfür notwendige Leitungsführung zwischen Pumpe und Mischerventil innerhalb des Gehäuses oder mit Bypassleitungen am Gehäuse können vom Fachmann frei gewählt werden.

Mit der Anordnung nach der Erfindung ist es möglich, die Umwälzpumpe selbst in den Heizungsrücklauf zu verlegen, was, wie schon erläutert, einen Heißwasserumlauf selbst dann ermöglicht, wenn die Pumpe selbst ausfällt, da sie in diesem Fall das Aufsteigen des heißen Wassers in keiner Weise behindert und das Rücklaufwasser aufgrund der Schwerkraft durch die Pumpe hindurch strömen kann.

**Patentansprüche**

1. Mischerventil für Heizungs- und Warmwasseranlagen, das im Gehäuse einer Umwälzpumpe derart integriert ist, daß das mit Schaufeln versehene radförmige Mischerstellglied und das Laufrad der Umwälzpumpe achsfluchtend angeordnet sind, so daß das Mischerstellglied von dem für das Laufrad der Umwälzpumpe vorgesehenen Antrieb uber eine steuer b are Kopplung oder ein- und ausrückbare Kupplungsglieder verstellt werden kann, dadurch gekennzeichnet, daß die Schaufeln (11) des Stellgliedes (10, 11, 12) in ihrer Breite geringer gehalten sind als die Breite des Mischerinnenraumes (10), so daß auch in der gesperrten Richtung, unabhängig von der Lage des Stellgliedes bzw. dessen Schaufeln, ein im Vergleich zum Gesamtdurchfluß stark verminderter Wasseraustausch in der Größenordnung von 10 % des Wasserdurchsatzes stattfindet.

2. Mischerventil nach Anspruch 1 dadurch gekennzeichnet, daß dem Stellglied eines ggfs. von Hand einstellbare Ruhestellung zugeordnet ist, die Heizkesselvorlauf mit Heizungsvorlauf einerseits und Heizungsrücklauf mit Heizkesselrücklauf andererseits verbindet und die beim Ausfall der Umwalzpumpe z.B. Stromausfall, ggfs. automatisch einstellbar ist.

3. Mischerventil nach Anspruch 2, dadurch gekennzeichnet, daß als Kupplung zwischen Antrieb und radförmigen Mischerstellglied eine durch eine Drehbewegung einstellbare mechanische Kupplung vorgesehen ist.

4. Mischerstellglied nach Anspruch 2 oder 3, dadurch gekennzeichnet, daß die mechanische Kupplung aus einer im antreibenden oder angetriebenen Teil radial verlaufenden Halbwelle besteht, die mit einem der Halbwelle entsprechenden Aufnahmeteil im anderen Teil derart zusammenarbeitet, daß die Halbwelle einmal in der Ausnehmung geführt ist und damit das andere Teil mitdreht und bei der Drehung um 180° Drehung der Ausnehmung über die abgeflachte Seite der Halbwelle zuläßt.

5. Mischerventil nach einem der vorhergehenden Ansprüche, dadurch gekennzeichnet, daß der Zuführkanal zur Zuführung des Rücklaufes vom Pumpengehäuse zur Mischerkammer in einem Winkel von 45° geführt ist.

**Revendications**

1. Vanne mélangeuse pour des installations de chauffage et d'eau chaude, qui est intégrée au corps d'une pompe de circulation, de manière que l'élément de réglage du mélangeur, en forme de roue et muni d'aubes, et la roue de la pompe de circulation sont montés coaxialement, de façon que l'élément de réglage du mélangeur puisse être déplacé par le dispositif d'entraînement de la roue de la pompe de circulation par l'intermédiaire d'un accouplement pouvant être commandé ou d'un élément d'accouplement débrayable, caractérisée en ce que les aubes (11) de l'élément de réglage (10, 11, 12) ont une largeur plus petite que la largeur de la chambre intérieure du mélangeur (10) de manière à obtenir, également dans la direction interdite, quelle que soit la position de l'organe de réglage et de ses aubes, un échange d'eau très diminué par rapport au passage total, de l'ordre de grandeur de 10% du débit d'eau.

2. Vanne mélangeuse suivant la revendication 1, caractérisée en ce qu'à l'élément de réglage est affectée une position de repos éventuellement réglable à la main, dans laquelle le conduit provenant de la chaudière de chauffage communique avec le conduit d'alimentation du chauffage d'une part, et le conduit de retour du chauffage communique avec le conduit de retour à la chaudière de chauffage d'autre part, cette position de repos s'établissant, le cas échéant, automatiquement lors de la défaillance de la pompe de circulation, par exemple en cas de panne du courant électrique.

3. Vanne mélangeuse suivant la revendication 2, caractérisée en ce qu'il est prévu comme accouplement, entre le dispositif d'entraînement et l'élément de réglage du mélangeur en forme de roue, un accouplement mécanique pouvant être réglé par un mouvement de rotation.

4. Elément de réglage d'un mélangeur suivant la revendication 2 ou 3, caractérisé en ce que l'accouplement mécanique est constitué d'un demi-arbre s'étendant radialement dans une partie menante ou menée, qui coopère avec une pièce de réception, correspondant au demi-arbre, d'une autre partie de façon que le demi-arbre soit guidé dans l'évidement et entraîne ainsi l'autre partie et de façon que, lors d'une rotation de 180°, il autorise une rotation de l'évidement sur le côté aplati du demi-arbre.

5. Vanne mélangeuse selon l'une des revendications précédentes, caractérisée en ce que le canal d'amenée, pour le passage du retour du corps de pompe à la chambre de mélange fait un angle de 45°.

## Claims

1. A mixer valve for heating and hot water systems which is integrated in the housing of a circulating pump in such manner that the wheel-like mixer control element provided with vanes and the propeller of the circulating pump are arranged axially in alignment, so that the mixer control element can be adjusted by the (drive) for the propeller of the circulating pump via a controllable coupling or coupling members which can be engaged and disengaged, characterised in that the vanes (11) of the control element (10, 11, 12) are kept smaller in breadth than the breadth of the mixer interior (10) so that even in the blocked direction, independently of the position of the control element or the vanes thereof, a water exchange which is greatly reduced in comparison to the overall through-flow and which is in the order of 10% of the water throughput takes place.

2. A mixer valve as claimed in Claim 1, characterised in that the control element is assigned a possibly manually adjustable rest position which connects the heating boiler outward flow with the heating circuit outward flow on the one hand and the heating circuit return flow with the heating boiler return flow on the other hand and which is adjustable, possibly automatically, in the event of the failure of the circulating pump, for example due to power failure.

3. A mixer valve as claimed in Claim 2, characterised in that a mechanical coupling which is adjustable by a rotary movement is provided as the coupling between drive means and wheel-shaped mixer control element.

4. A mixer control element as claimed in Claim 2 or 3, characterised in that the mechanical coupling comprises a half-shaft which extends radially in the driving or driven component and which cooperates with a receiving member provided in the other component and corresponding to the half-shaft, in such manner that the half-shaft is introduced into the recess whereby the other component co-rotates and upon 180° rotation permits the recess to rotate over the flattened side of the half-shaft.

5. A mixer valve as claimed in one of the preceding Claims, characterised in that the supply channel which conducts the return flow from the pump housing to the mixer chamber extends at an angle of 45°.

Fig.1

Fig.2

Fig.3